# EUROPEAN PATENT APPLICATION

(11) **EP 2 600 256 A1**
(43) Date of publication of application: **05.06.2013**
(21) Application number: 10855369.4
(22) Date of filing: 02.09.2010
(51) Int. Cl.: G06F 17/30, G06F 15/167, G06F 9/30, G06F 17/28

(54) **SYNCHRONIZED LINKING METHOD AND SYSTEM BETWEEN ENGINEERING ANALYSIS PROGRAMS BY USING A SHARED MEMORY OF A DATABASE**

(30) Priority: 29.07.2010 KR 20100073204
(71) Applicant: Korea Hydro&Nuclear Power Co. Ltd, Gyeongsangbuk-do 780-010 (KR)
(72) Inventor: HONG, Jin-hyuk, Daejeon 305-810 (KR)
(74) Representative: Habermann, Hruschka & Schnabel
(86) International application number: PCT/KR2010/005946
(87) International publication number: WO 2012/015097

(57) **Abstract**

A synchronized linking system between engineering analysis programs according to the present invention includes: a global variable extracting unit for extracting global variables defined in source codes of programs; a memory management unit for creating a database to search for global variables according to variable name and storing the database in the shared memory; a translation unit for changing an original source code to allocate a storage space on the shared memory, and then, creating an execution file for each program, after removing a global variable declaration area of the source codes; and a code executing unit for executing the execution files created by the translation unit and progressing over time at synchronized time intervals, and storing and restoring the storage space of the shared memory that determines a status of each program on a physical memory.

## Description

### TECHNICAL FIELD

The present invention relates to a synchronized linking method and system between engineering analysis programs by using a shared memory with a database. More particularly, the present invention relates to a method of storing and completely restoring the input/output statuses of linkage variables between a plurality of engineering analysis programs and the current status of each of the programs and of enabling a time-synchronized integrated execution by reallocating the storage spaces of all internal variables used by each program as the spaces of the shared memory functioning as a database if the programs are integrated and used for complex analysis.

### BACKGROUND ART

Existing codes had been developed for single purpose such as a safety analysis code used for plant system design/safety analysis.

When integration is conventionally made to enable merging the existing codes and analyzing the behavior of the integrated entire system, several methods have been used where the source code of existing codes is merged as a large code or the values of linkage variables between several codes are exchanged and combined by calling functions through dynamic link library (DLL) or static library LIB. Since these methods predefine the types and kinds of linkage variables between programs and transfer values to function arguments, linkage variables between programs increase as the number of programs to be integrated increases. Thus, since the kinds of functions to be transferred and the number of times calling them increase geometrically and it needs to modify (that is, translate) source codes as linkage variables are altered, it takes a long time in integration and development involving a source modification(that is, translation) and compile processes.

In addition, when version-up is performed on each program, there is also a difficulty that the program should experience such an integration process once more to reflect the version-up. In addition, to realize a specific situation when executing integrated codes, the specific situation may be stored only if program sources should be manually translated to codes that record only variables selected for restart on physical memories. Thus, there are many problems that it is fundamentally impossible to store/restore the statuses of programs at a certain time except for predetermined times and it needs to translate program sources to transfer linkage variables to the outside for graphic linkage for analysis.

### DISCLOSURE OF THE INVENTION

### TECHNICAL PROBLEM

The present invention is to solve the problems described above.

The present invention provides a SYNCHRONIZED LINKING METHOD AND SYSTEM BETWEEN ENGINEERING ANALYSIS PROGRAMS in which by using the storage spaces of all internal variables used by engineering analysis programs to be integrated as a shared memory with a database, it is possible to input and output any linkage variables without modification of program sources due to alterations to linkage variables, and it is possible to completely restore the current status of each of executions files to be the same as the statuses of their stored times, just by storing defined shared memories in physical memories such as hard disks and restoring the contents of the physical memories through the shared memories, wherein each execution file is time-synchronized, and its independent execution is guaranteed.

### TECHNICAL SOLUTION

A synchronized linking system between engineering analysis programs according to present invention includes a global variable extracting unit extracting global variables defined in the source codes of programs; a memory management unit creating a database to enable the global variables to be searched according to variable names and storing the database in a shared memory; a translation unit removing the declaration areas of the global variables of the source codes, translating an original source code so that a storage space is allocated on the shared memory, and creating execution files for each program; and a code executing unit executing the execution files created by the translation unit and performing time advancement at synchronized time intervals, storing and restoring the storage space of the shared memory that determines a status of each program, on a physical memory.

In particular, the global variable extracting unit parses the global variables, creates information including one or more of a description, an unit, a system, a type, a dimension, an offset value, a name for each global variable in a specific structure, and transfers the created information to the memory management unit.

In order to reallocate the global variables transferred from the global variable extracting unit on the storage space of the shared memory, the memory management unit configures the shared memory in a structure with an organized memory management logic and inserts information on global variables to the structure. In addition, the memory management unit provides functions that perform delete and search functionality, and thus plays a role in performing database management on the shared memory for global variables.

In addition, the header of the shared memory comprises integer information representing the size of the storage space on the shared memory that is taken by the objects of a structure with one-to-one correspondence to the global variables, integer information representing the size of the storage space on the shared memory that is taken by the current value of the global variable, and integer information representing the size of the storage space of execution files to be executed by the code executing unit.

In addition, the header of the shared memory further comprises a variable managing the objects of the structure with one-to-one correspondence to the global variables as a database, a variable storing the start address of the storage space of the objects of the structure with one-to-one correspondence to the global variables, a variable storing the start address of the current value storage space of the global variables, and a variable storing the start address of the storage space of the execution files.

In addition, the shared memory comprises a storage space storing the objects of the structure with one-to-one correspondence to the global variables, a storage space storing the current values of the global variables, and a storage space storing information on the execution files.

In addition, the memory management unit defines a management structure for inserting, deleting, and traversing the objects of the structure with one-to-one correspondence to the global variables, and the management structure comprises a variable representing the total number of registered global variables, a variable indicating the central node of the entire global variables for data search, and functions for inserting, deleting, traversing, and searching the objects of the structure with one-to-one correspondence to the global variables.

In addition, the translation unit translates the time advancement section repeat syntax of the original source code into a synchronization entity waiting logic and creates the execution file to enable time advancement at a time when a time synchronization signal generated by the code executing unit becomes ON.

In addition, the translation unit stores information on the execution files in the execution information structure on the shared memory, and the execution information structure includes a storage space storing execution file names, a synchronization entity storage space receiving synchronization signals, and a storage space storing the execution status of the execution file.

In addition, the code executing unit gets the contents of objects that are registered with the storage space storing execution file names, the synchronization entity storage space receiving synchronization signals, and the storage space storing the execution status of the execution file, and uses them for performing the synchronization of the execution files.

Meanwhile, a synchronized linking method between engineering analysis programs includes extracting global variables defined in the source codes of programs; creating a database to enable the global variables to be searched according to variable names and storing the database in a shared memory; removing the declaration areas of the global variables of the source codes, translating an original source code so that a storage space is allocated on the shared memory, and creating execution files for each program; and executing the created execution files and performing time advancement at synchronized time intervals, storing and restoring the storage space of the shared memory that determines a status of each program, on a physical memory.

In particular, the extracting of the global variables defined in the source codes of programs comprises parsing the global variables and creating information including one or more of a description, a unit, a system, a type, a dimension, an offset value, a name for each global variable in a specific structure.

In addition, the creating of the database for enabling the global variables to be searched according to variable names and the storing of the database in a shared memory comprises defining a management structure for inserting, deleting, and traversing the objects of a structure with one-to-one correspondence to the global variables.

In addition, the management structure comprises a variable representing the total number of registered global variables, a variable indicating the central node of the entire global variables for data search, and functions for inserting, deleting, traversing, and searching the objects of the structure with one-to-one correspondence to the global variables.

In addition, the removing of the declaration areas of the global variables of the source codes, the translating of the original source code and the creating of the execution files for each program comprises storing information on the execution files in the execution information structure on the shared memory.

In addition, the execution information structure comprises a storage space storing execution file names, a synchronization entity storage space receiving synchronization signals, and a storage space storing the execution status of the execution file.

In addition, if a plurality of programs are integrated and used for complex analysis, the method further includes reallocating the storage space of all internal variables used by each program to the shared memory with the database, storing the defined shared memory in the physical memory, and restoring the contents of the physical memory through the shared memory to restore the status of each execution file to be the same as a status of the stored time.

In addition, if being linked to a graphic program for an engineering analysis program, the method further includes reallocating internal global variables in the similar manner to the shared memory with the database, extracting and updating the current values of linkage variables.

### ADVANTAGEOUS EFFECTS

The present invention may provide the following effects.

It has needed significantly long integration periods and very frequent code translation periods due to the alterations to linkage variables when development is made in a way of directly integrating typical source codes to make large source sources or exchanging function arguments, such as DLL or LIB, in order to integrate a plurality of engineering analysis programs. However, the present invention has an effect that since all information on all global variables is shared by using organized shared memories, many drawbacks may be overcome such as inefficiency due to the generation of a plurality of linkage transfer functions and due to an increase in the number of times calling linkage functions, and translations in numerous source codes for linkage variables, and thus an integration and development period may be significantly shortened.

In addition, in typical direct source code integration, it needs to make a source code to record a specific time on the source code on a physical memory so as to store statuses during the execution of a program and it is fundamentally impossible to store and restore the statuses of programs at a certain time except for predetermined times. However, according to the present invention, it is possible to completely restore the current status of each of executions files to be the same as the statuses of their stored times, just by storing defined shared memories in physical memories such as hard disks and restoring the contents of the physical memories through the shared memories. Thus, it is possible to store the statuses of programs at any time if engineering analysis through programs is needed, and it is possible to provide great benefits when systems are analyzed by using synchronized integration systems.

In addition, in typical direct source code integration, a long integration process should be again repeated to reflect the version-up of programs if the version-up is performed on each of the programs, although an integration program is completed after much trial and error. However, as it is possible to achieve time synchronization while each execution file is independently executed according to the present invention, it is possible to provide a fundamental method that enables each program to be independently maintained and to be integrated into a version-up code.

In addition, typical source code integration needs to publish internal variables to the outside through direct function linkage by assigning linkage variables to be displayed one by one in a program source dimension when graphic linkage programs are developed. However, according to the present invention, it is possible to provide greatly convenient functions when linkage programs for other purposes, such as graphic display programs are also developed.

### BRIEF DESCRIPTION OF THE DRAWINGS

FIG. 1 is a view explaining a synchronized linkage system between engineering analysis programs using a shared memory with a database according to the present invention;

FIG. 2 is a view explaining a structure of a shared memory with a database according to the present invention;

FIGS. 3 to 7 are views explaining structures used in the present invention;

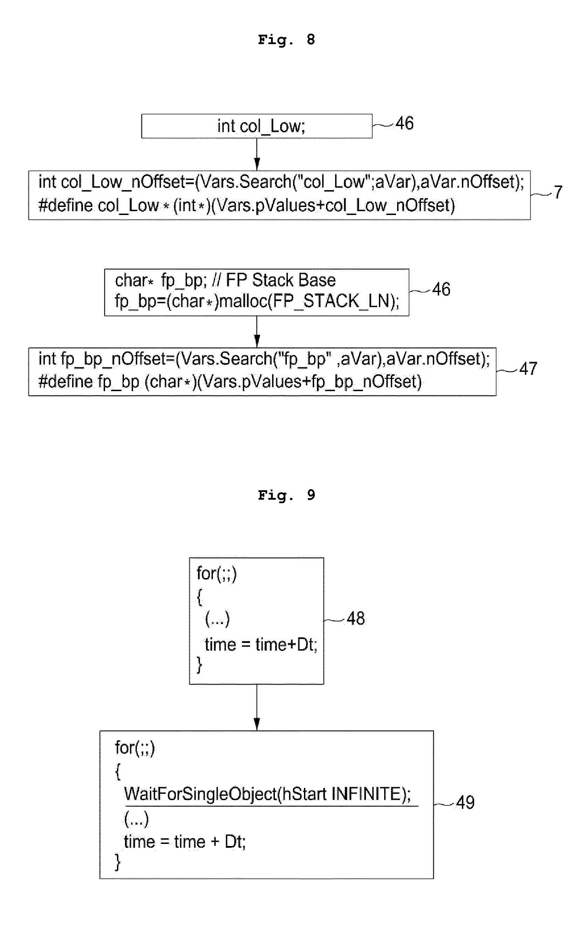

FIGS. 8 and 9 are views explaining translations of original source codes in the translation unit of a linkage system according to the present invention.

FIG. 10 is a flow chart explaining a synchronized linkage method between engineering analysis programs using a shared memory with a database according to the present invention.

### MODE FOR CARRYING OUT THE INVENTION

The present invention will be described in detail below with reference to the accompanying drawings. Redundant description and detailed descriptions related to well-known functions or configurations will be ruled out in order not to unnecessarily obscure subject matters of the present invention. These embodiments are provided so that this disclosure will be thorough and complete, and will fully convey the concept of the invention to those skilled in the art. Thus, the shapes and sizes of the elements in the accompanying drawings may be exaggerated for further understanding of the present invention.

A synchronized linking method and system between engineering analysis programs by using a shared memory with a database will be described in detail below.

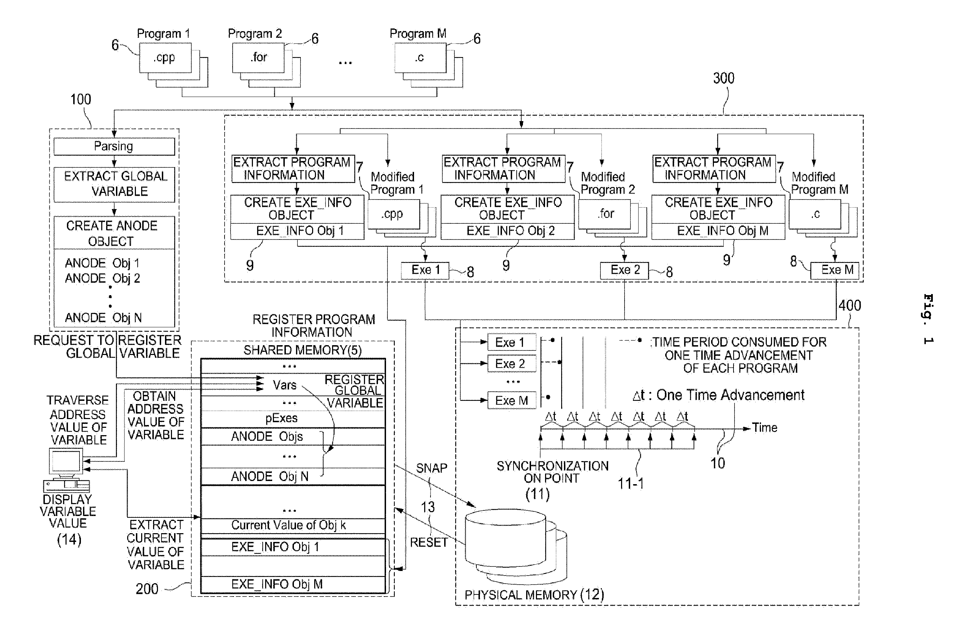

FIG. 1 is a view explaining a synchronized linkage system between engineering analysis programs using a shared memory with a database according to the present invention.

Referring to FIG. 1, the synchronized linkage system between engineering analysis programs according to the present invention includes a global variable extracting unit 100 for extracting global variables used by the constituent source codes of programs, along with various kinds of information; a memory management unit 200 for creating a database to enable global variables to be searched according to a variable name (a key value) and logically storing the database in a shared memory; a translation unit 300 for removing the declaration areas of the global variables of the source codes, instead translating an original source code so that a storage space is allocated on the shared memory provided by the memory management unit 200, and then creating an execution file; and a code executing unit 400 for executing the execution files created by the translation unit 300 and performing time advancement at synchronized time intervals, and storing and restoring the storage space of the shared memory that determines a status of each program on a physical memory.

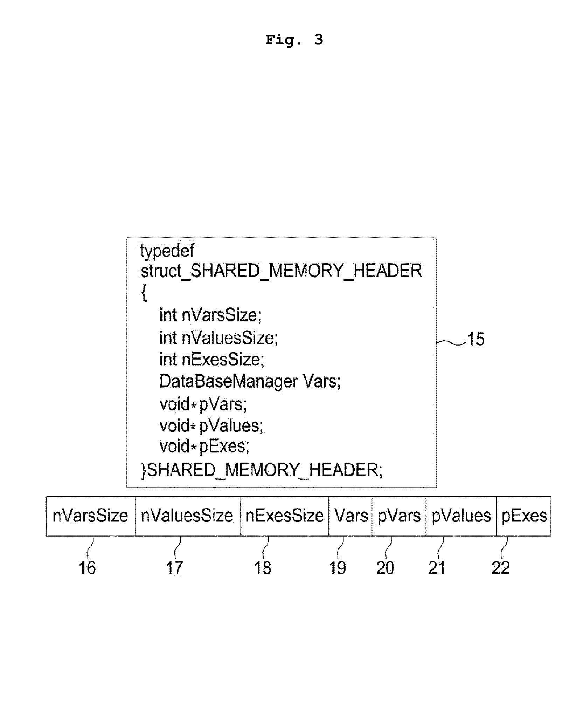

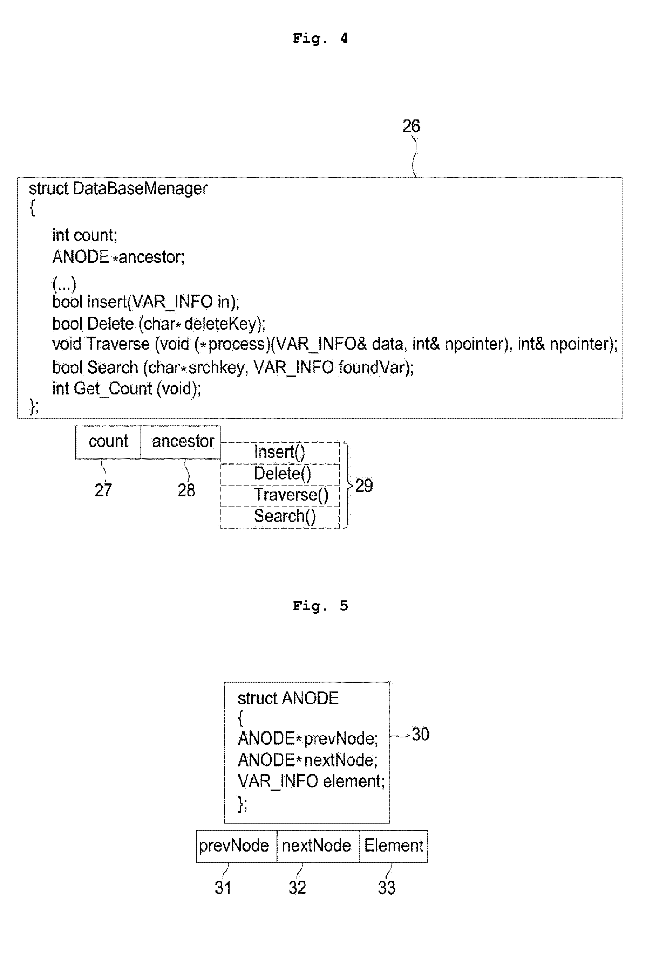

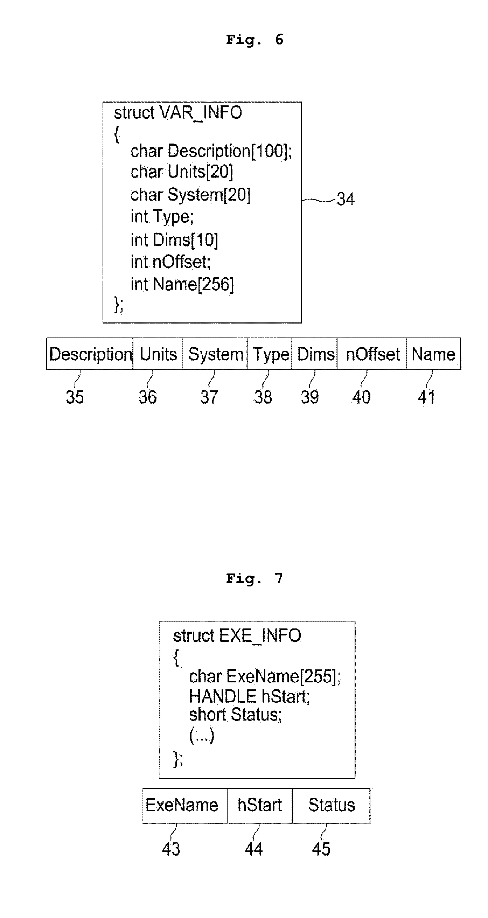

Referring to FIGS. 1 to 7, the global variable extracting unit 100 parses all global variables (alternatively, static variables, heap variables such as new/malloc, etc.) defined in source codes 6 configuring single program, makes various kind of information such as Description 35 on a global variable, Units 36, System 37, Type 38, Dims 39, nOffset 40 for a memory address storing the current value of a variable, Name 41, in a VAR_INFO structure 34, and transfers it to the memory management unit 200.

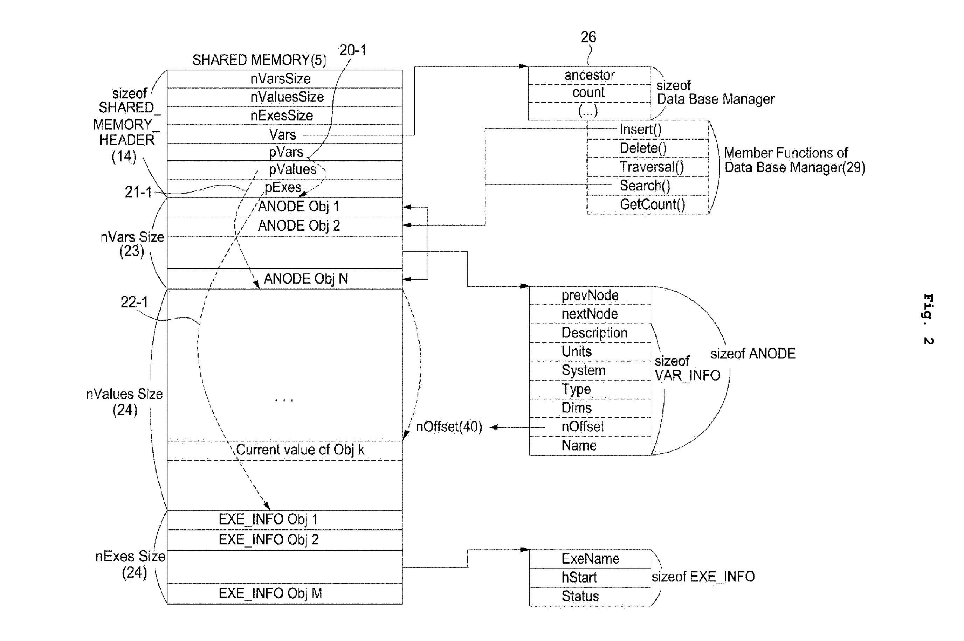

In order to reallocate the global variables transferred from the global variable extracting unit 100 on the storage space of a shared memory 5, the memory management unit 200 configures the shared memory 5 in a structure with an organized memory management logic as in FIG. 2 and inserts information on global variables into the VAR_INFO structure 34. In addition, the memory management unit 200 provides functions that perform delete and search functionality 29, and thus plays a role in performing database management on the shared memory for global variables.

To this end, the shared memory 5 has a memory structure similar as that of FIG. 2 and the header of the shared memory 5 starts with a SHARED_MEMORY_HEADER structure 15.

More specifically, integer information representing the size of a storage space 23 on the shared memory 5 of ANODE objects 30 being structures making one-to-one correspondence to global variables (in this case, corresponding to a nVarsSize value) is stored in the first four byte space 16 of the SHARED_MEMORY_HEADER structure 15. In addition, integer information representing the size of the current value storage space 24 of a global variable on the shared memory 5 (in this case, corresponding to a nValuesSize value) is stored in the next four byte space 17. In addition, integer information representing the size of the information storage space 25 of execution files to be executed by the code executing unit 400 to be described below (in this case, corresponding to a nExesSize value) is stored in the next four byte space 18.

In addition, the SHARED_MEMORY_HEADER structure 15 stores a Vars member variable 19 that is a DataBaseManager structure 26 for making the objects of the ANODE structure 30 as a database and managing (searching/inserting/deleting) them, a pVars pointer member variable 20 that stores the start address 20-1 of the storage space 23 (size: nVarsSize bytes) of the ANODE objects 30, a pValues pointer member variable 21 that stores the start address 21-1 of the current value storage space 24 (size: nValuesSize bytes) of global variables, and a pExes pointer member variable 22 that stores the start address 22-1 of the information storage space 25 (size: nExesSize bytes) of execution files, as components.

In addition, the shared memory 5 includes the storage space 23 of the ANODE objects 30 described above. In addition, the shared memory 5 includes the current value storage space 24 of internal global variables and information storage space 25 for execution files (which number corresponds to the number of analysis codes to be executed).

If a global variable of the source codes 6 of engineering analysis programs is extracted by the global variable extracting unit 100, information on the global variable is filled with fields of the VAR_INFO structure 34. The VAR_INFO structure 34 is configured with the following fields:

- Description : description string storage space for variables 35,

- Units : unit storage space for variables 36,

- System : name storage space for a representative system to which variables belong 37,

- Type : variable type (char/bool/short/int/real/double, etc.) information storage space 38,

- Dims : variable dimension information storage space 39,

- nOffset : offset storage space 40 from the start address 101 of a space to store the current value of a global variable to a corresponding variable value storage space,

- Name : variable name string storage space 41.

The ANODE structure 30 includes the VAR_INFO structure 34 and two ANODE pointer variables 30 as member variables, and the ANODE pointer member variables 31 and 32 are concepts corresponding to the previous and next Node pointers of a database. One global variable has one corresponding ANODE object 30.

In addition, the present invention defines the DataBaseManager structure 26 so as to insert, delete, and traverse the ANODE structures 30 logically and simply. In this case, the DataBaseManager structure 26 corresponds to the 'management structure' that is set forth in the following claim.

The DataBaseManager structure 26 includes a Count member variable 27 that is the total number of registered global variables (namely, the number of registered ANODE objects), an ancestor member variable 28 that is an ANODE structure pointer indicating the central node of all global variables for data search, and Insert/Delete/Traverse/Search member functions 29 for inserting, deleting, traversing, and searching the ANODE structure 30.

If one global variable is extracted and information on one ANODE structure 30 is obtained, the ANODE object 30 is inserted into one region of the ANODE object storage space 23 by the Insert 29 function of the Vars member variable 19 that is the DataBaseManager structure 26 of the SHARED_MEMORY_HEADER structure 15.

In this case, the nVarsSize that is the size of the ANODE object storage space 23 increases by +sizeof (ANODE), pValues address values 21 and 101 also increase by +sizeof (ANODE), the nValuesSize that is the size of the pValues storage space 24 also increases by +sizeof (data type of global variables), and pExes pointer values 22 and 102 that are a space 25 in which execution file information is stored correspondingly increases.

In addition, information on execution files 8 created by the translation unit 300 to be described below is stored in an EXE_INFO structure 42 and its member variables are as follows. In this case, the EXE_INFO structure 42 corresponds to the 'execution information structure' that is set forth in the following claims.

The 'ExeName' is a storage space 43 in which an execution file name including a path is stored, and the 'hStart' is a synchronization entity storage space 44 that receives a synchronization signal, and the 'Status' member variable is a storage space 45 in which the execution status of an execution file is stored.

The storage space 25 of the EXE_INFO objects is located at the end of the shared memory 5 (namely, after the nValuesSize bytes) and the EXE_INFO objects registered in the space 25 is used for performing synchronization by the code executing unit 400.

If getting **sizeof(SHARED_MEMORY_HEADER) + nVarsSize + nValuesSize + nExeSize** bytes that correspond to the entire size of the shared memory, the shared memory 5 with the logic structure described above may traverse and search all global variable information and current status values. Further, if the entire byte of the shared memory 5 is stored in a physical memory 12 such as a hard disk, restoration to the status of a specific time may be completely performed later and thus the code executing unit 400 to be described below may store and restore the current status by using it.

The translation unit 300 removes the declaration area 46 of a global variable (in the case of C language, a heap variable such as new/malloc) from the source codes 6 of each program. Instead the translation unit 300 performs syntax analysis on original sources and translates 47 sources themselves so that the storage space is allocated on a shared memory provided by the memory management unit 200.

In addition, the translation unit 300 translates the time advancement 10 section repeat syntax 48 of a program into a synchronization entity waiting logic 49 to enable time advancement 10 only at a time 11 when a time synchronization signal generated by the code execution unit 400 becomes ON, and compiles the translated sources to link execution files.

The code execution unit 400 enables searching information on execution files 8 in an execution file information storage space 25 on the shared memory and performing synchronization.

That is, the code executing unit 400 gets the contents of the EXE_INFO 45 objects that are recorded in a space (size: nExesSize bytes) from the start address of the execution file information storage space 25 being the stored value of the pExes pointer member variable 22 of the shared memory 5 to the end of the shared memory, and extracts the paths and file names of execution files 8, and executes the execution files 8. In this case, the execution files 8 wait synchronization signals in a waiting status by a synchronization waiting function 49 such as a WaitForSignalObject function.

By receiving synchronization signals generated by the code executing unit 400, each execution file 8 experiences synchronization time advancement 10. In this case, each execution file 8 advances 11-1 by Δt (time advancement) given and then comes a waiting status back by the synchronization waiting function. The status member variable 45 of the EXE_INFO structure 42 represents whether a corresponding execution file 8 has finished the time advancement operation once. The code executing unit 400 periodically gets the status member variable information of all EXE_INFO 42 objects, translates the signal of a synchronization entity into ON 11 when all executions files 8 have finished time advancement once, and enables the execution files 8 to experience the next time advancement. With such logic, each execution file 8 may be executed while making time synchronization.

In addition, the code executing unit 400 records **sizeof(SHARED_MEMORY_HEADER) + nVarsSize + nValuesSize + nExesSize** bytes corresponding to the entire size of the shared memory 5 described previously in a physical memory 12 such as a hard disk, and may thus store the statuses of all execution files when recording is performed. In addition, the current status of each execution file 8 may be completely restored to the same status as that of the stored time just by restoring the contents of the physical memory 12 through the shared memory 5.

According to the present invention described previously, it has needed significantly long integration periods and very frequent code translation periods due to the alterations to linkage variables when development is made in a way of directly integrating typical source codes to make large source sources or exchanging function arguments, such as DLL or LIB, in order to integrate a plurality of engineering analysis programs 6. However, the present invention has an effect that since all information on all global variables is shared by using organized shared memories, many drawbacks may be overcome such as inefficiency due to the generation of a plurality of linkage transfer functions and due to an increase in the number of times calling linkage functions, and translations in numerous sources codes for linkage variables, and thus an integration and development period may be significantly shortened.

In addition, in typical direct source code integration, it needs to make a source code to record a specific time on the source code on a physical memory so as to store statuses during the execution of a program and it is fundamentally impossible to store and restore the statuses of programs at a certain time except for predetermined times. However, according to the present invention, it is possible to completely restore the current status of each of executions files 8 to be the same as the statuses of their stored times, just by storing the defined shared memory 5 in the physical memory 12 such as hard disks and restoring the contents of the physical memory 12 through the shared memory 5. Thus, it is possible to store the statuses of programs at any time if engineering analysis through programs is needed, and it is possible to provide great benefits when systems are analyzed by using synchronized integration systems.

In addition, in typical direct source code integration, a long integration process should be again repeated to reflect the version-up of programs if the version-up is performed on each of the programs, although an integration program is completed after much trial and error. However, as it is possible to achieve time synchronization while each execution file 8 is independently executed according to the present invention, it is possible to provide a fundamental method that enables each program to be independently maintained and to be integrated into a version-up code.

In addition, typical source code integration needs to publish internal variables to the outside through direct function linkage by assigning linkage variables to be displayed one by one in a program source dimension when graphic linkage programs are developed. However, according to the present invention, it is possible to provide greatly convenient functions when linkage programs for other purposes, such as graphic display programs are also developed.

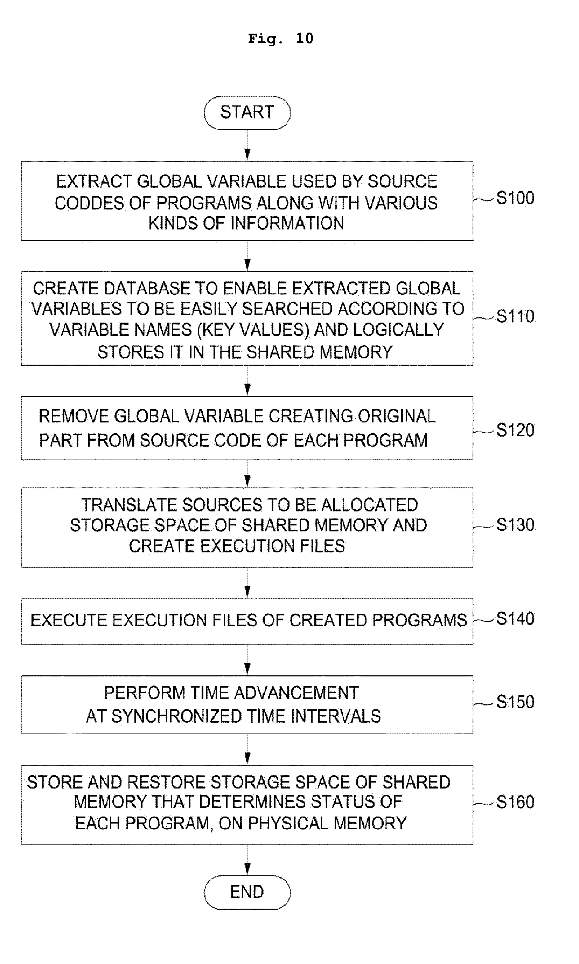

FIG. 10 is a flow chart explaining a synchronized linkage method between engineering analysis programs using a shared memory with a database according to the present invention.

The synchronized linkage method between engineering analysis programs according to the present invention includes extracting global variables defined source codes of programs; creating a database to enable the global variables to be searched according to variable names and storing the database in the shared memory; removing the declaration areas of the global variables of the source codes, translating an original source code so that a storage space is allocated on the shared memory, and creating an execution file; and executing the created execution file, performing time advancement at synchronized time intervals, and storing and restoring the storage space of the shared memory that determines a status of each program on a physical memory.

Referring to FIG. 10, the global variable extracting unit first parses all global variables (alternatively, static variables, heap variables such as new/malloc, etc.) defined in source codes configuring single program, makes various kind of information on the variables in the VAR_INFO structure 34, and transfers it to the memory management unit, in step S100.

Then, the memory management unit creates a database to enable the global variables transferred from the global variable extracting unit to be easily searched according to variable names (key values) and logically stores it in the shared memory, in step S110.

In addition, the translation unit removes the declaration area 46 of the global variables (in the case of C language, heap variables such as new/malloc) from the source codes 6 of each program. Instead the translation unit performs syntax analysis on original sources and translates sources themselves so that the storage space is allocated on a shared memory provided by the memory management unit, in step S120. In addition, the translation unit translates the time advancement section repeat syntax of a program into a synchronization entity waiting logic to enable time advancement only at a time when a time synchronization signal generated by the code execution unit becomes ON, and compiles the translated sources to create execution files, in step S130.

Then, the code execution unit enables searching information on execution files 8 from an execution file information storage space on the shared memory and performing synchronization, in step S140. Thus, each execution files 8 experience synchronization time advancement by receiving synchronization files generated by the code executing unit, in step S150.

Last, the code executing unit records bytes corresponding to the entire size of the shared memory described above in a physical memory such as a hard disk, may thus store the statuses of all execution files when recording is performed, and may completely restore the current status of each execution file to the same status as that of the stored time just by restoring the contents of the physical memory through the shared memory.

Hitherto, the best mode was disclosed in the drawings and specification. While specific terms were used, they were not used to limit the meaning or the scope of the present invention described in Claims, but merely used to explain the present invention. Accordingly, a person having ordinary skill in the art will understand from the above that various modifications and other equivalent embodiments are also possible. Hence, the real protective scope of the present invention shall be determined by the technical scope of the accompanying claims.

## Claims

1. A synchronized linking system between engineering analysis programs, the system comprising:
a global variable extracting unit extracting global variables defined in the source codes of programs;
a memory management unit creating a database to enable the global variables to be searched according to variable names and storing the database in a shared memory;
a translation unit removing the declaration areas of the global variables of the source codes, translating an original source code so that a storage space is allocated on the shared memory, and creating execution files for each program; and
a code executing unit executing the execution files created by the translation unit and performing time advancement at synchronized time intervals, storing and restoring the storage space of the shared memory that determines a status of each program, on a physical memory.

2. The system of claim 1, wherein the global variable extracting unit parses the global variables, creates information including one or more of a description, an unit, a system, a type, a dimension, an offset value, a name for each global variable in a specific structure, and transfers the created information to the memory management unit.

3. The system of claim 1, wherein the header of the shared memory comprises integer information representing the size of the storage space on the shared memory that is taken by the objects of a structure with one-to-one correspondence to the global variables, integer information representing the size of the storage space on the shared memory that is taken by the current value of the global variable, and integer information representing the size of the storage space of execution files to be executed by the code executing unit.

4. The system of claim 3, wherein the header of the shared memory further comprises a variable managing the objects of the structure with one-to-one correspondence to the global variables as a database, a variable storing the start address of the storage space of the objects of the structure with one-to-one correspondence to the global variables, a variable storing the start address of the current value storage space of the global variables, and a variable storing the start address of the storage space of the execution files.

5. The system of claim 3, wherein the shared memory comprises a storage space storing the objects of the structure with one-to-one correspondence to the global variables, a storage space storing the current values of the global variables, and a storage space storing information on the execution files.

6. The system of claim 3, wherein the memory management unit defines a management structure for inserting, deleting, and traversing the objects of the structure with one-to-one correspondence to the global variables, and the management structure comprises a variable representing the total number of registered global variables, a variable indicating the central node of the entire global variables for data search, and functions for inserting, deleting, traversing, and searching the objects of the structure with one-to-one correspondence to the global variables.

7. The system of claim 1, wherein the translation unit translates the time advancement section repeat syntax of the original source code into a synchronization entity waiting logic and creates the execution file to enable time advancement at a time when a time synchronization signal generated by the code executing unit becomes ON.

8. The system of claim 1, wherein the translation unit stores information on the execution files in the execution information structure on the shared memory, and the execution information structure includes a storage space storing execution file names, a synchronization entity storage space receiving synchronization signals, and a storage space storing the execution status of the execution file.

9. The system of claim 8, wherein the code executing unit gets the contents of objects that are registered with the storage space storing execution file names, the synchronization entity storage space receiving synchronization signals, and the storage space storing the execution status of the execution file, and uses them for performing the synchronization of the execution files.

10. A synchronized linking method between engineering analysis programs, the method comprising:
extracting global variables defined in the source codes of programs;
creating a database to enable the global variables to be searched according to variable names and storing the database in a shared memory;
removing the declaration areas of the global variables of the source codes, translating an original source code so that a storage space is allocated on the shared memory, and creating execution files for each program; and
executing the created execution files and performing time advancement at synchronized time intervals, storing and restoring the storage space of the shared memory that determines a status of each program, on a physical memory.

11. The method of claim 10, wherein the extracting of the global variables defined in the source codes of programs comprises parsing the global variables and creating information including one or more of a description, an unit, a system, a type, a dimension, an offset value, a name for each global variable in a specific structure.

12. The method of claim 10, wherein the creating of the database for enabling the global variables to be searched according to variable names and the storing of the database in a shared memory comprises defining a management structure for inserting, deleting, and traversing the objects of a structure with one-to-one correspondence to the global variables.

13. The method of claim 12, wherein the management structure comprises a variable representing the total number of registered global variables, a variable indicating the central node of the entire global variables for data search, and functions for inserting, deleting, traversing, and searching the objects of the structure with one-to-one correspondence to the global variables.

14. The method of claim 10, wherein the removing of the declaration areas of the global variables of the source codes, the translating of the original source code so that a storage space is allocated on the shared memory, and the creating of the execution files for each program comprises storing information on the execution files in the execution information structure on the shared memory.

15. The method of claim 14, wherein the execution information structure comprises a storage space storing execution file names, a synchronization entity storage space receiving synchronization signals, and a storage space storing the execution status of the execution file.

16. The method of claim 10, further comprising, if a plurality of programs are integrated and used for complex analysis, reallocating the storage space of all internal variables used by each program to the shared memory with the database, storing the defined shared memory in the physical memory, and restoring the contents of the physical memory through the shared memory to restore the status of each execution file to be the same as a status of the stored time.

17. The method of claim 16, further comprising, if being linked to a graphic program for an engineering analysis program, reallocating internal global variables in the similar manner to the shared memory with the database, extracting and updating the current values of linkage variables.
